# EUROPÄISCHE PATENTSCHRIFT

(11) **EP 2 158 073 B1**
(45) Veröffentlichungstag und Bekanntmachung des Hinweises auf die Patenterteilung: **06.03.2019**
(21) Anmeldenummer: 08749551.1
(22) Anmeldetag: 14.04.2008
(51) Int. Cl.: B29C 73/16, B60C 29/06, B60S 5/04

(54) **REIFENABDICHTVORRICHTUNG**
TIRE SEALING DEVICE
DISPOSITIF POUR ASSURER L'ÉTANCHÉITÉ DE PNEUMATIQUES

(30) Priorität: 09.06.2007 DE 102007026776
(43) Veröffentlichungstag der Anmeldung: 03.03.2010
(73) Patentinhaber: Continental Reifen Deutschland GmbH, 30165 Hannover (DE)
(72) Erfinder: DETERING, Rainer, 30926 Seelze (DE); DUMKE, Michael, 17506 Gutzkow (DE); ERNST, Gerhard, 30629 Hannover (DE); KASCHUB, Dirk, 31275 Ahlten (DE); GERLACH, Markus, 31073 Grünenplan (DE)
(74) Vertreter: Finger, Karsten
(86) Internationale Anmeldenummer: PCT/EP2008/054472
(87) Internationale Veröffentlichungsnummer: WO 2008/151870

(56) Entgegenhaltungen:
- EP-A1- 1 621 325
- DE-A1- 10 106 468
- DE-A1- 19 846 451
- DE-U1- 20 212 101
- DE-U1-202005 005 291
- DE-U1-202006 001 994
- US-A1- 2002 121 331
- US-A1- 2003 056 851

## Beschreibung

Die Erfindung betrifft eine Vorrichtung zum Abdichten aufblasbarer Gegenstände, insbesondere eine Reifenabdichtvorrichtung, mit einem Abdichtmittelbehälter, der ein Abdichtmittel enthält und ein Steigrohr, das in den Abdichtmittelbehälter ragt, ein Siegel, das den Abdichtmittelbehälter flüssigkeitsdicht verschließt, und einen Einlass, der in den Abdichtmittelbehälter mündet, umfasst, einer Entnahmevorrichtung zum Entnehmen von Abdichtmittel aus dem Abdichtmittelbehälter, die einen ersten Anschluss zum Einleiten von Druckluft und einen zweiten Anschluss zum Ableiten von Abdichtmittel umfasst und ausgebildet ist, um mit dem Abdichtmittelbehälter reversibel verbunden zu werden.

Eine derartige Vorrichtung, die anstelle eines Reserverades beispielsweise in Pkw vorgehalten wird, um Reifenschäden zu reparieren, ist beispielsweise aus der DE 101 06 468 A1 bekannt. Nachteilig daran ist, dass die dort beschriebene Vorrichtung entweder mit einem nicht versiegelten Abdichtmittelbehälter arbeitet, der das Abdichtmittel dem Sauerstoff aussetzt, oder aber mit einer Siegelfolie verschlossen ist, die nur durch das Aufbringen eines hohen Luftdrucks zerstört werden kann. Insbesondere dann, wenn die Vorrichtung für Fahrradreifen verwendet werden soll, ist mit herkömmlichen Luftpumpen ein derartiger Druck nur schwer zu erreichen und stellt eine Unbequemlichkeit für den Benutzer dar.

Aus der EP 0 753 420 B1 ist eine Vorrichtung zum Abdichten von Reifen bei Pannen bekannt, bei der ein Druckmittel das Abdichtmittel aus einem gasdichten Abdichtmittelbehälter heraus treibt. Nachteilig hieran ist, dass nach Verwendung die komplette Vorrichtung entsorgt oder Dichtmittel unter hohem Aufwand in den Dichtmittelbehälter zugeführt werden muss. Beides ist für den Benutzer mit Aufwand verbunden.

Aus der WO 01 72504 A1 ist eine Abdichtvorrichtung bekannt, bei der der Abdichtmittelbehälter auf die Entnahmevorrichtung aufschraubbar ausgebildet ist. Die Entnahmevorrichtung besitzt zum Aktivieren eine absprengbare Verschlussanordnung. Nachteilig hieran ist, dass die Verschlussanordnung auch durch Druck abgesprengt werden kann, der vom angeschlossenen, noch mit Restdruck beaufschlagten Reifen herrührt. In diesem Fall ist es möglich, dass zuerst Dichtmittel in Richtung Kompressor strömt und diesen beschädigt oder unnutzbar macht.

Auch aus der DE 198 46 451 A1 ist eine Vorrichtung zum Abdichten aufblasbarer Gegenstände bekannt, die jedoch kein Steigrohr aufweist und damit nur betrieben werden kann, wenn die Entnahmevorrichtung eine hinreichend große Stellfläche aufweist. Dadurch wird die Entnahmevorrichtung nachteiligerweise sehr sperrig, was die Lagerung der Vorrichtung erschwert und materialintensiv ist.

Aus der FR 671 659 ist eine Vorrichtung zum Abdichten aufblasbarer Gegenstände bekannt, bei der der Abdichtmittelbehälter gesondert mit einem Druckluftanschluss und einem Anschluss zum Ableiten des Dichtmittels versehen werden müssen.

Die US 2003/056851 offenbart eine Vorrichtung zum Abdichten eines aufblasbaren Objekts, bei dem ein durch Kompressordruck verschiebbarer Kolben oder Stutzen mit einem schneidenden Vorsprung ein Siegel eines Dichtmittelbehälters durchstößt. Die Vorrichtung ist jedoch nur für den Betrieb kopfüber geeignet.

Eine ähnliche ausgebildete Vorrichtung offenbart die EP 1 621 325 A1, hier wird jedoch mit dem schneidenden Vorsprung auch ein Filter bzw. ein Sieb verschoben, dass im Dichtmittel etwa vorhandene Verunreinigungen zurückhalten soll. Auch hier muss die Dichtmittelflasche zum einwandfreien Betrieb auf dem Kopf stehen.

Der Erfindung liegt die Aufgabe zugrunde, Nachteile im Stand der Technik zu überwinden. Die Erfindung löst das Problem durch eine gattungsgemäße Vorrichtung, bei der die Entnahmevorrichtung eine Trennvorrichtung zum Durchbrechen des Siegels besitzt.

Vorteilhaft ist an der erfindungsgemäßen Vorrichtung, dass durch das Vorhandensein des Steigrohrs in dem Abdichtmittelbehälter die Vorrichtung auf dem Abdichtmittelbehälter stehend betrieben werden kann, was sie sehr kippstabil macht. Das größte Gewicht der Vorrichtung wird nämlich durch das Abdichtmittel verursacht, das sich vorteilhafterweise stets in Bodennähe des Abdichtmittelbehälters befindet und damit den Schwerpunkt der gesamten Vorrichtung nach unten verlagert. Sperrige Entnahmevorrichtungen werden damit entbehrlich.

Es ist ein weiterer Vorteil der erfindungsgemäßen Vorrichtung, dass sie sehr einfach zu bedienen ist, was insbesondere deshalb von Vorteil ist, weil die Vorrichtung nur im selten auftretenden Fall einer Reifenpanne eingesetzt werden muss, so dass die Bedienung meist nicht geübt ist.

Unter einer Trennvorrichtung zum Durchbrechen des Siegels wird im Rahmen der vorliegenden Beschreibung insbesondere jede Komponente der Vorrichtung zum Abdichten aufblasbarer Gegenstände verstanden, die dazu ausgebildet ist, um die Integrität des Siegels so weit aufzuheben, dass Druckluft in den Abdichtmittelbehälter einströmen und Abdichtmittel ausströmen kann.

Eine einfach zu bedienende Vorrichtung ergibt sich, wenn die Entnahmevorrichtung auf den Abdichtmittelbehälter aufschraubbar ist und die Trennvorrichtung eine Schneidvorrichtung ist, die ausgebildet ist, um beim Aufschrauben der Entnahmevorrichtung auf den Abdichtmittelbehälter das Siegel des Abdichtmittelbehälters zu durchtrennen. In diesem Fall muss von dem Benutzer der Vorrichtung lediglich die Entnahmevorrichtung auf den Abdichtmittelbehälter geschraubt werden, um die Vorrichtung einsatzbereit zu machen.

Die Erfindung betrifft eine Ausführungsform, bei der die die Trennvorrichtung einen beweglich gelagerten Koppelstutzen umfasst, der so ausgebildet ist, dass er sich dann, wenn die Entnahmevorrichtung mit dem Abdichtmittelbehälter verbunden ist und der erste Anschluss mit Druckluft beaufschlagt wird, in Richtung auf den Abdichtmittelbehälter zu bewegt, das Siegel durchbricht und mit dem Steigrohr abdichtmitteldicht koppelt. Hieran ist vorteilhaft, dass der Abdichtmittelbehälter so lange versiegelt bleibt, bis der erste Anschluss mit Druckluft beaufschlagt wird. In mit Druckluft beaufschlagtem Zustand besteht keine Gefahr, dass Abdichtmittel in den für Druckluft vorgesehenen Anschluss gelangt und diesen so verstopft oder durch Auslaufen verloren geht und davor wird ein Austreten von Abdichtmittel durch das Siegel verhindert.

Es ist besonders bevorzugt, dass der Koppelstutzen an einer Koppeleinheit ausgebildet ist, die zwischen einer Ruhestellung und einer Entnahmestellung beweglich in einem Gehäuse der Entnahmevorrichtung gelagert ist und einen Verbindungskanal aufweist, wobei der Koppelstutzen in der Entnahmestellung mit dem Steigrohr abdichtmitteldicht gekoppelt ist und der Verbindungskanal nur in der Entnahmestellung den Einlass des Abdichtmittelbehälters mit dem zweiten Anschluss verbindet. Hierdurch wird sichergestellt, dass nach Aufschrauben der Entnahmevorrichtung auf den Abdichtmittelbehälter kein Abdichtmittel aus dem zweiten Anschluss auslaufen kann, so lange nicht der erste Anschluss mit Druckluft beaufschlagt ist. Ein weiterer Vorteil ist, dass ein fälschliches Anschließen einer Druckluftquelle an den zweiten Anschluss keine negativen Folgen hat. Wenn nämlich der zweite Anschluss irrtümlich mit Druckluft beaufschlagt wird, so liegt an dem ersten Anschluss keine Druckluft an und der Koppelstutzen gelangt nicht in die Entnahmestellung. Auf diese Weise werden Fehlbedienungen durch ungeübte Benutzer vermieden.

Eine besonders einfach zu bedienende Vorrichtung ergibt sich, wenn das Steigrohr konzentrisch zu einem Gewinde angeordnet ist, mittels dem die Entnahmevorrichtung auf den Abdichtmittelbehälter aufschraubbar ist. Bevorzugt ist dann der Einlass ringförmig um das Steigrohr angeordnet. Beispielsweise wird das Steigrohr durch dünne Stege in dem Einlass gehaltert. Die Vorrichtung besitzt eine besonders geringe, auch bei korrekter Bedienung der Vorrichtung im Abdichtmittelbehälter verbleibende Restentnahmemenge, wenn das Steigrohr sich über einen geometrischen Mittelpunkt des Abdichtmittelbehälters hinaus in den Abdichtmittelbehälter erstreckt. Besonders bevorzugt besitzt das Steigrohr ein freies Ende und liegt mit diesem an einer Innenwand des Abdichtmittelbehälters an. Abdichtmittel kann dann durch am freien Ende vorgesehene Eintrittsöffnungen in das Steigrohr eintreten, so dass im Wesentlichen das gesamte Abdichtmittel den Abdichtmittelbehälter verlassen kann.

In einer Ausführungsform umfasst die Vorrichtung eine Druckluftquelle, die ausschließlich mit dem ersten Anschluss verbindbar ausgebildet ist. Das kann beispielsweise dadurch geschehen, dass die Druckluftquelle einen Ausgangsanschluss besitzt, der mit dem zweiten Anschluss der Entnahmevorrichtung nicht koppelbar ist. Auf diese Weise werden Fehlbedienungen vermieden

Die Vorrichtung umfasst zudem eine Ventileinheit zum Verbinden mit einem Reifenventil, insbesondere einem Autoreifenventil, die ausschließlich mit dem zweiten Anschluss verbindbar ausgebildet ist. Auf diese Weise wird verhindert, dass die Ventileinheit irrtümlich mit dem ersten Anschluss für die Druckluft verbunden wird. Auf diese Weise wird eine Fehlbedienung weitestgehend ausgeschlossen.

Es ist bevorzugt, dass der Abdichtmittelbehälter eine der Entnahmevorrichtung abgewandte Standfläche bzw. eine Stellfläche aufweist, auf der die Entnahmevorrichtung, d.h. der Abdichtmittelbehälter im mit der Entnahmevorrichtung verbundenen Zustand kippsicher stellbar ist. Der Abdichtmittelbehälter ist insbesondere dann kippsicher stellbar, wenn er auf einem um 20° zur Horizontale geneigten ebenen Untergrund nicht umkippt. Das kann beispielsweise dadurch erreicht werden, dass die Standfläche so ausgebildet ist, dass ein Kipppunkt des Abdichtmittelbehälters stets jenseits der senkrechten Projektion des Abdichtmittelbehälters auf die Standfläche liegt. Der Kipppunkt ist die Stelle der Standfläche des Abdichtmittelbehälters. Mit anderen Worten stellen die Punkte, in denen der Abdichtmittelbehälter einen ebenen, horizontalen Untergrund berühren, die von oben gesehenen äußersten Punkte dar. Auf diese Weise wird ein besonders sicher stehender Abdichtmittelbehälter erhalten.

In einer Ausführungsform ist das Steigrohr flexibel ausgebildet und besitzt an seinem freien Ende ein Gewicht, das so ausgebildet ist, dass es das freie Ende stets nach unten ausrichtet. In diesem Fall kann die Vorrichtung auch liegend betrieben werden. Alternativ ist es möglich, das Steigrohr so kurz auszubilden, dass es nur um einen so kleinen Betrag in den Abdichtmittelbehälter ragt, dass im Wesentlichen das gesamte Abdichtmittel aus dem Abdichtmittelbehälter entnehmbar ist, wenn die Vorrichtung mit der Entnahmevorrichtung nach unten betrieben wird.

Eine Ausbildung besteht darin, dass das Steigrohr um einen so kleinen Betrag in den Abdichtmittelbehälter ragt, dass im Wesentlichen das gesamte Abdichtmittel aus dem Abdichtmittelbehälter entnehmbar ist, wenn die Vorrichtung mit der Entnahmevorrichtung nach unten betrieben wird. Damit lässt sich der Abdichtmittelbehälter in der "Kopf-ÜberStellung" nahezu vollständig entleeren.

Eine weitere Ausbildung besteht darin, dass die Trennvorrichtung von außen, insbesondere manuell, betätigbar ausgebildet und durch einen Sicherungsstift gegen unbeabsichtigte Betätigung gesichert ist.

Im Folgenden wird ein Ausführungsbeispiel der Erfindung anhand der beigefügten Figuren näher erläutert. Dabei zeigen die
- Figuren 1a, 1b, 1c und 1d: eine erfindungsgemäße Reifenabdichtvorrichtung im Bedienungsablauf, die
- Figuren 2a, 2b, 2c, 2d,2e und 2f: eine weitere Ausführungsform einer erfindungsgemäßen Reifenabdichtvorrichtung ebenfalls im Bedienungsablauf.
- Figur 3: zeigt eine schematische Teilansicht einer weiteren Ausführungsform einer erfindungsgemäßen Reifenabdichtvorrichtung.

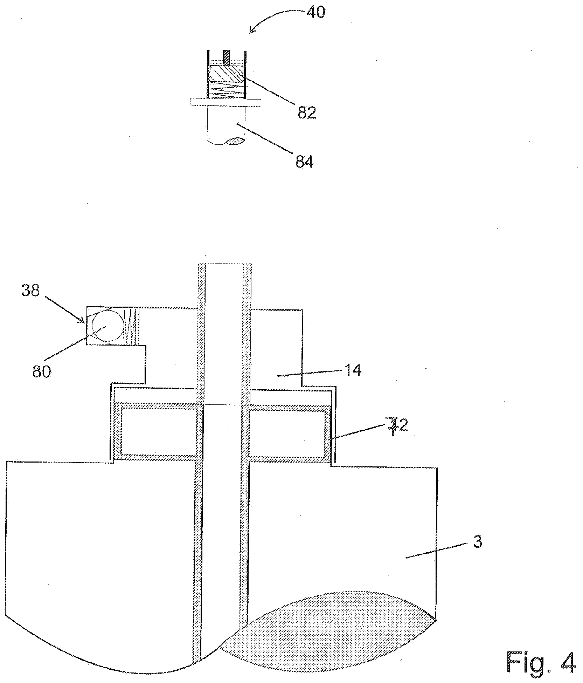

Figur 4 zeigt eine Ansicht einer weiteren erfindungsgemäßen Reifenabdichtvorrichtung. Figur la zeigt eine Reifenabdichtvorrichtung 10, die einen Abdichtmittelbehälter 12 und eine Entnahmevorrichtung 14 umfasst. Der Abdichtmittelbehälter 12 enthält eine vorgegebene Menge an Abdichtmittel 16, bei dem es sich beispielsweise um mit Zusätzen versehene Latexmilch handelt. In den Abdichtmittelbehälter 12 ragt über einen geometrischen Mittelpunkt M des Abdichtmittelbehälters 12 hinaus ein Steigrohr 18, das mit einem freien Ende 20 an einer Innenwand 22 des Abdichtmittelbehälters 12 anliegt. An seinem freien Ende 20 besitzt das Steigrohr 18 mindestens eine Ausnehmung 24, durch die Abdichtmittel 16 in ein Inneres des Steigrohrs 18 gelangen kann.

Das Steigrohr 18 ist über einen Einsatz 26 in einem Behälterkörper 28 des Abdichtmittelbehälters 12 konzentrisch zu dessen Längsachse L gelagert. Im Einsatz 26 ist ein Einlass 30 ausgebildet, der das Steigrohr 18 kreisringförmig umgibt und dieses über in Figur la nicht eingezeichnete Stege hält. Der Einsatz 26 kann in Form einer Presspassung in einen Gewindestutzen 32, der einen integralen Bestandteil des Behälterkörpers 28 darstellt, eingepasst sein und hat einen offenen Querschnitt, der ein leichtes Befüllen mit Abdichtmittel 16 erlaubt. Alternativ ist der Einsatz 26 mit dem Behälterkörper 28 dauerfest verbunden, beispielsweise verklebt oder verschweißt. Der Abdichtbehälter 12 ist über ein Siegel 34 abdichtmittel- und gasdicht verschlossen. Das Abdichtmittel 16 unterliegt aus diesem Grund nur einer sehr geringen oxidativen Alterung.

Die Entnahmevorrichtung 14 besitzt ein Gehäuse 36, an dem ein erster Anschluss 38 zum Einleiten von Druckluft und ein zweiter Anschluss 40 zum Ableiten von Dichtmittel 16 ausgebildet sind. Am Gehäuse 36 ist zudem ein Innengewinde 42 vorgesehen, das mit einem Außengewinde 44 am Gewindestutzen 32 zusammenwirkt.

Im Gehäuse 36 ist eine Trennvorrichtung in Form einer Schneidvorrichtung 46 vorgesehen, die radial außen an einem Koppelstutzen 48 angeordnet ist. Der Koppelstutzen 48 steht in Verbindung mit dem zweiten Anschluss 40, nicht aber mit dem ersten Anschluss 38 und besitzt ein spitzes Ende 50, das zylinderförmig so ausgebildet ist, dass es mit dem Steigrohr 18 abdichtmitteldicht koppelbar ist. In der Umgebung des spitzen Endes 50 besitzt der Koppelstutzen 48 dazu ein Dichtelement, vorzugsweise einen O-Ring 52.

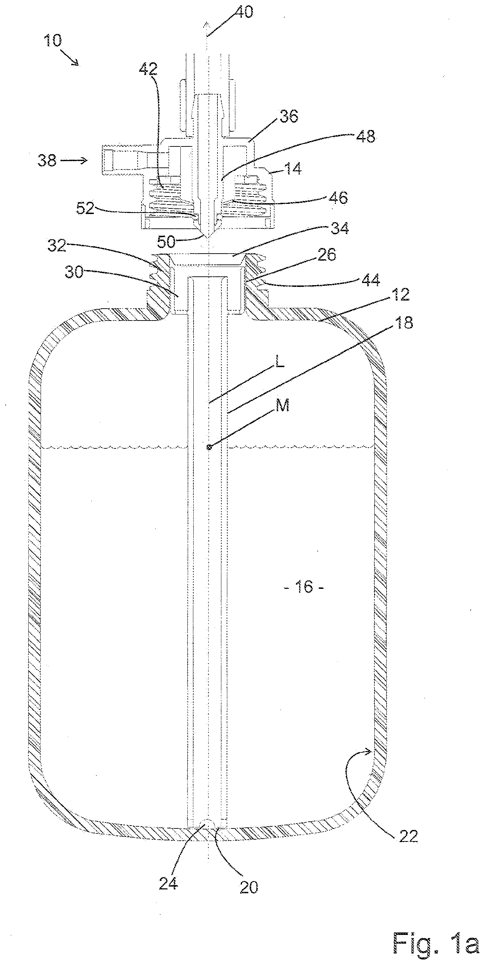

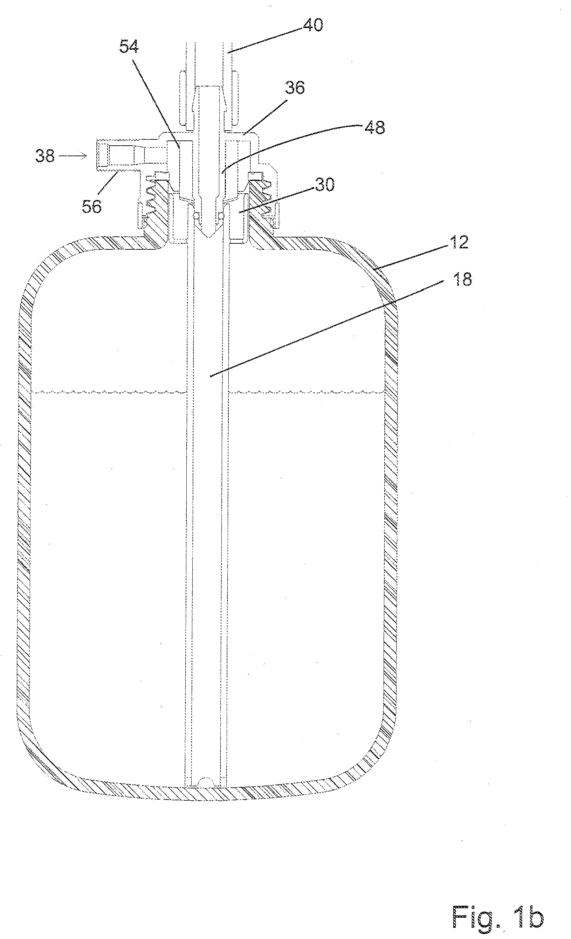

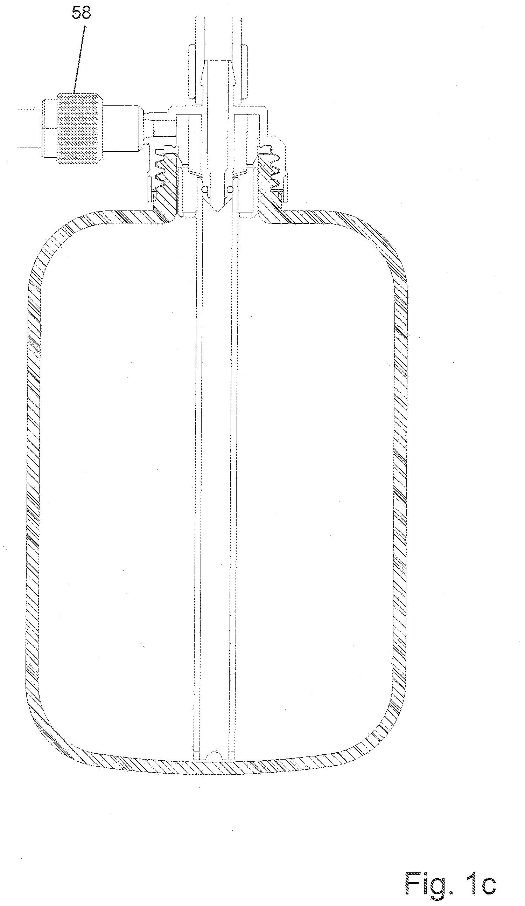

Wird die Entnahmevorrichtung 14 auf den Abdichtmittelbehälter 12 aufgeschraubt, so durchstößt zunächst das spitze Ende 50 das Siegel 34 und beim Weiterdrehen zerschneidet anschließend die Schneidvorrichtung 46 das Siegel 34 zusätzlich. Am Ende des Aufschraubens ergibt sich die in Figur 1b gezeigte Situation, bei der der zweite Anschluss 40 über den Koppelstutzen 48 mit dem Steigrohr 18 verbunden ist. Gleichzeitig ist der erste Anschluss 38 über einen Ringkanal 54 im Gehäuse 36 und über den Einlass 30 mit dem Innenraum des Abdichtmittelbehälters 12 verbunden. Über ein Gewinde 56 kann anschließend eine nicht eingezeichnete Druckluftquelle, wie beispielsweise ein Kompressor, über einen Adapter 58 angeschlossen werden (Figur lc).

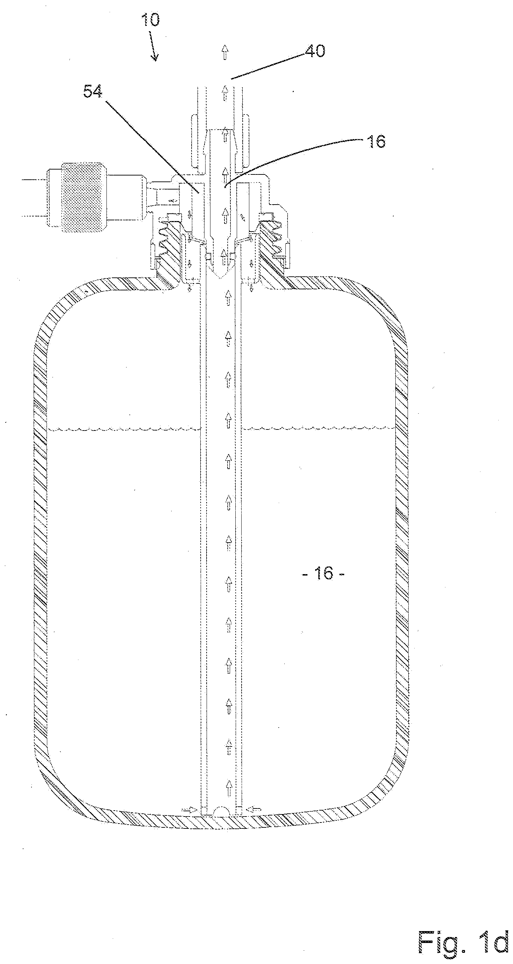

Figur 1d zeigt den Zustand, in dem Druckluft 60 aus der Druckluftquelle in den Abdichtmittelbehälter 12 geleitet wird, so dass Abdichtmittel 16 durch das Steigrohr 18, den Koppelstutzen 48 und den zweiten Anschluss 40 die Reifenabdichtvorrichtung 10 verlässt und über eine nicht eingezeichnete Leitung in einen beschädigten Reifen eingeleitet wird, um dort ein Loch zu verschließen.

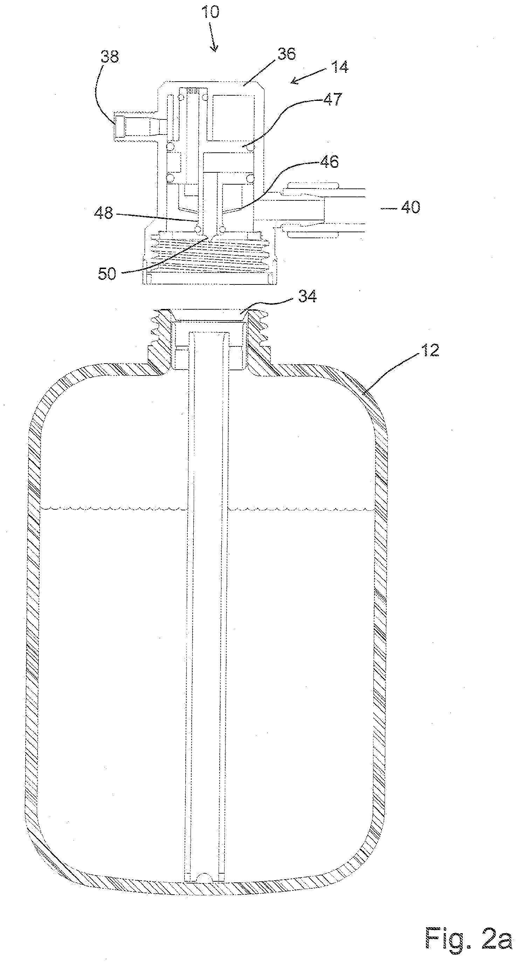

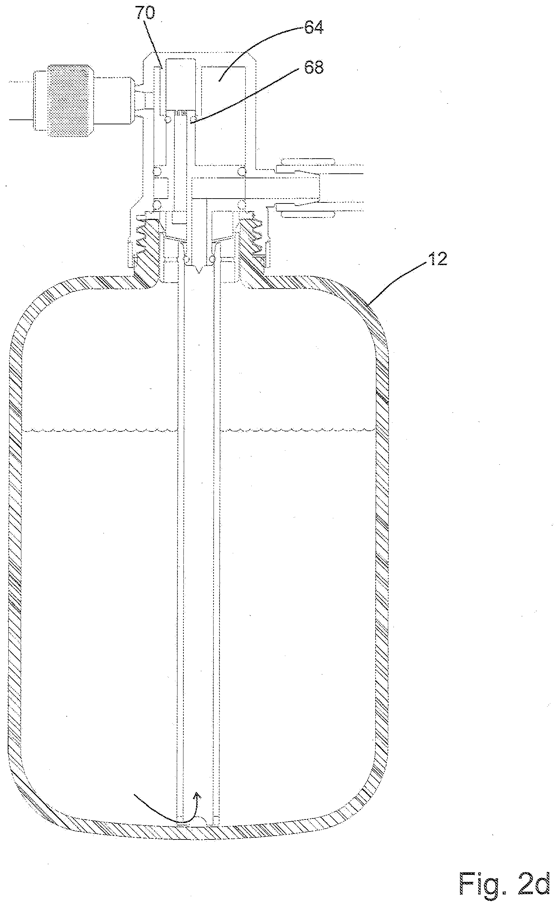

Figur 2a zeigt eine zweite Ausführungsform einer erfindungsgemäßen Reifenabdichtvorrichtung 10, bei der die Trennvorrichtung in Form der Schneidvorrichtung 46 an einer beweglich gelagerten Koppeleinheit 47 angeordnet ist, an der auch der Koppelstutzen 48 ausgebildet ist. Die Koppeleinheit 47 ist im Gehäuse 36 so gelagert, dass sie eine Ruhestellung, die in Figur 2a gezeigt ist, und eine Entnahmestellung, wie sie in Figur 2d gezeigt ist, einnehmen kann.

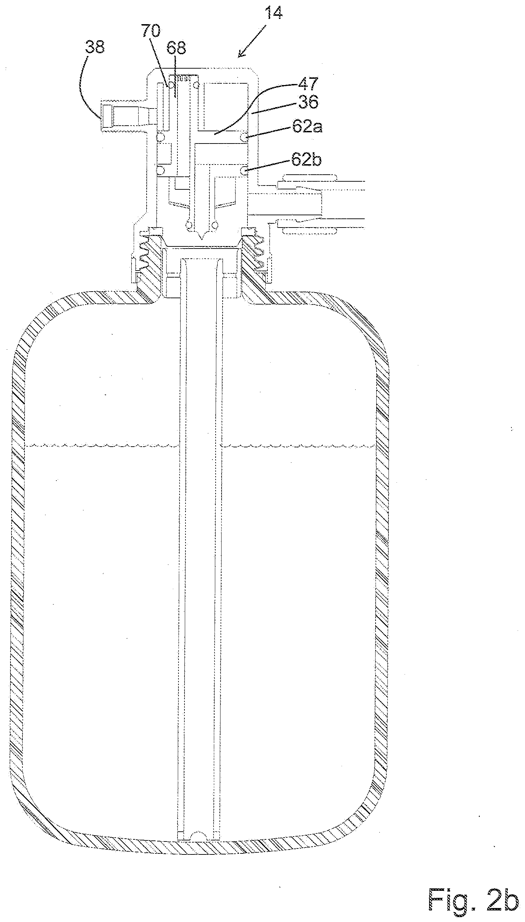

In der Ruhestellung (Figur 2a) befindet sich der Koppelstutzen 48 in einer Position, in der auch ein Aufschrauben der Entnahmevorrichtung 14 auf den Abdichtmittelbehälter 12 nicht dazu führt, dass der Koppelstutzen 48 das Siegel 34 durchstößt. Dieser aufgeschraubte Zustand ist in Figur 2b gezeigt.

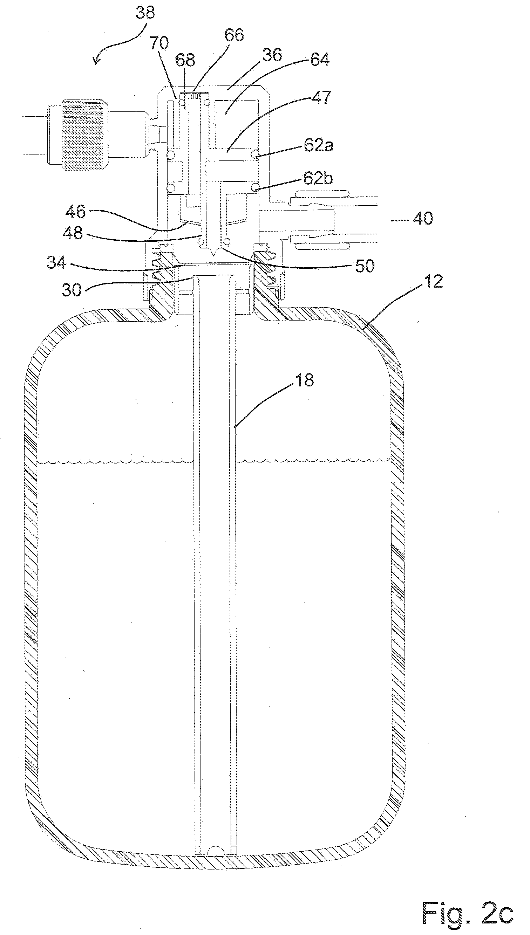

Wie Figur 2c zeigt, ist die Koppeleinheit 47 über zwei Ringdichtungen 62a, 62b in dem Gehäuse 36 gelagert. Dadurch ist ein Zylindervolumen 64 gebildet, dass mit dem ersten Anschluss 38 in Verbindung steht, nicht aber mit dem zweiten Anschluss 40. Die Koppeleinheit 47 besitzt zudem einen Verbindungskanal 66, der in einem Verbindungsstutzen 68 ausgebildet ist. Der Verbindungsstutzen 68 wird in der in Figur 2c gezeigten Ruhestellung so von einer Dichthülse 70, die an dem Gehäuse 36 ausgebildet ist, umgeben, dass in der Ruhestellung aus dem ersten Anschluss 38 einströmende Druckluft nicht in den Verbindungsstutzen 68 gelangen kann.

Figur 2c zeigt den Zustand, in dem der erste Anschluss 38 mit einer nicht eingezeichneten Luftquelle verbunden ist. Die Druckluftquelle kann beispielsweise ein Kompressor oder eine Druckluftflasche sein. Wird der erste Anschluss 38 mit Druckluft beaufschlagt, so gelangt diese in das Zylindervolumen 64 und übt einen Druck auf die Koppeleinheit 47 aus, die sich daraufhin auf den Abdichtmittelbehälter 12 zu bewegt. Dadurch durchbricht das spitze Ende 50 des Koppelstutzens 48 das Siegel 34 und der Koppelstutzen 48 wird mit dem Steigrohr 18 verbunden.

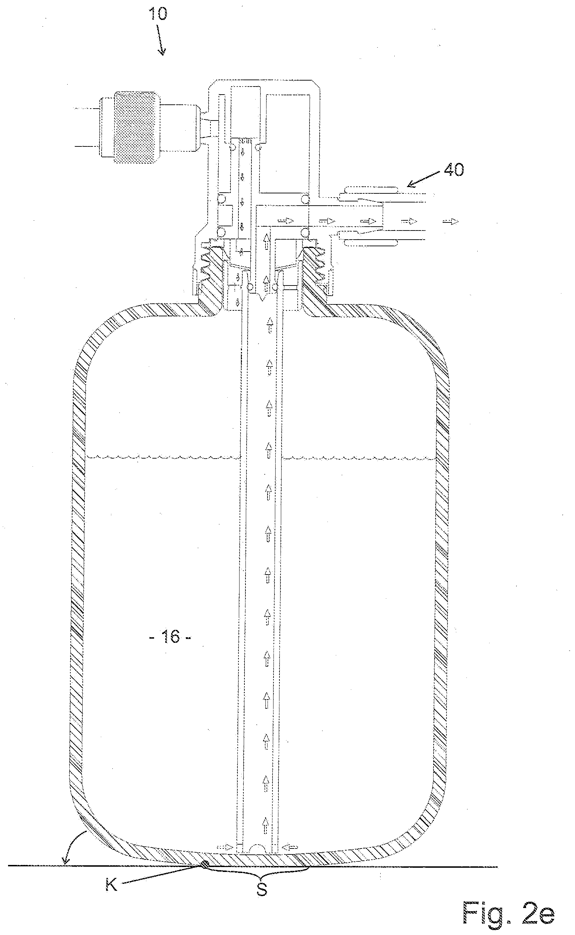

In dieser Stellung, die in Figur 2d gezeigt ist, ist der Verbindungsstutzen 68 so weit aus der Dichthülse 70 heraus bewegt, dass Druckluft durch den Verbindungskanal 66 im Verbindungsstutzen 68 und durch den Einlass 30 in den Abdichtmittelbehälter 12 gelangen kann. Wie in Figur 2e gezeigt ist, drückt diese Druckluft Abdichtmittel 16 durch den zweiten Anschluss 40 heraus. Von dort aus wird es durch einen nicht eingezeichneten Druckschlauch zu einem ebenfalls nicht eingezeichneten Reifen geleitet. In einer alternativen Ausführungsform ist vorgesehen, dass die Druckluft durch den zweiten Anschluss 40 und das Steigrohr 18 eingeleitet wird, so dass das Abdichtmittel 16 durch den ersten Anschluss 38 ausgetrieben wird. Dazu ist das Zylindervolumen 64 ausschließlich mit dem zweiten Anschluss 40 verbunden.

Gemäß einer weiteren alternativen Ausführungsform besitzt das freie Ende 20 (vgl. Figur la) des Steigrohrs 18 ein Gewicht und das Steigrohr 18 ist so ausgebildet, dass das Gewicht das freie Ende 20 jeweils nach unten ausrichtet. Dadurch wird vorteilhafterweise erreicht, dass die Reifenabdichtvorrichtung nicht nur, wie in den Figuren la bis 1d und 2a bis 2f gezeigt, aufrecht stehend betrieben werden kann, sondern in jeder beliebigen Lage.

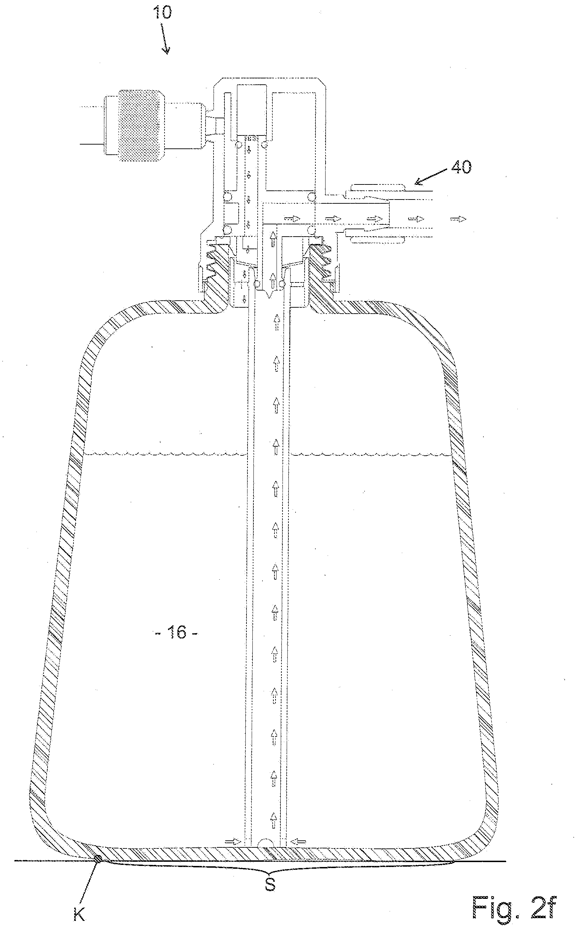

Der in den Figuren gezeigte Abdichtmittelbehälter 12 weist zudem eine Standfläche S auf (Figur 2e), mit der er auf einem ebenen Untergrund in Kontakt steht. Die Standfläche S ist so groß ausgebildet, dass der Untergrund um beispielsweise 20° gegenüber der Horizontalen geneigt sein kann, ohne dass die Abdichtvorrichtung 10 in einem Kipppunkt K umkippt. Eine besonders große Standfestigkeit wird erreicht, wenn die Standfläche S gleichzeitig den größten Querschnitt bezüglich eines horizontalen Schnitts durch den Abdichtmittelbehälter 12 darstellt (Figur 2f).

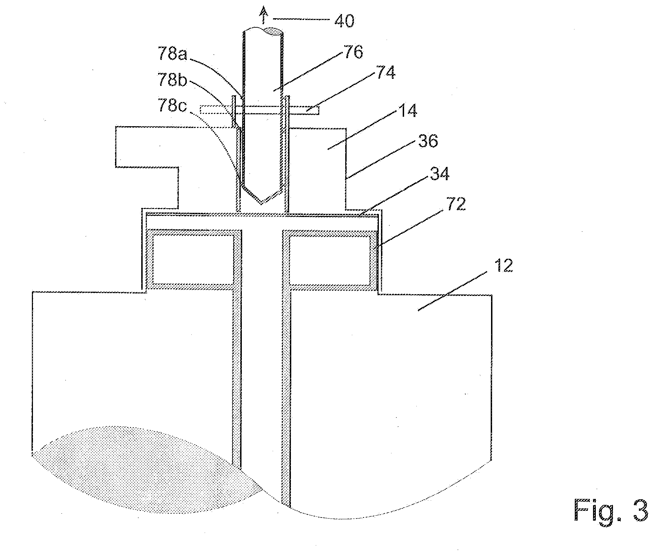

Figur 3 zeigt eine alternative Ausführungsform einer Entnahmevorrichtung 14, die eine Steigrohrhalterung 72 umgibt und an der eine über einen Sicherungsstift 74 gesicherte Schneidvorrichtung in Form eines Trennbolzens 76 gelagert ist. Nach Entfernen des Trennsicherungsstifts 74 kann der Trennbolzen 76 per Hand eingeschlagen werden und durchtrennt das Siegel 34. Der Trennbolzen 76 ist über O-Ringe 78a, 78b, 78c gegenüber dem Gehäuse 36 abgedichtet und hohl ausgebildet, so dass er zugleich als zweiter Anschluss 40 fungiert.

Figur 4 zeigt eine weitere alternative Entnahmevorrichtung 14, bei der die Steigrohrhalterung 72 über ein federbelastetes Einlassventil 80 mit dem ersten Anschluss 38 verbunden ist. Das Ventil 80 wird durch den Anschlussvorgang der Luftquelle an die Entnahmeeinheit automatisch geöffnet. Der zweite Anschluss 40 besitzt ein federbelastetes Auslassventil 82, welches sich öffnet, sobald der Anschluss auf das Reifenventil geschraubt wird. Somit sorgen beide Ventile für eine Abdichtung des Abdichtmittelbehälters. Am Anschluss 84 wird der Druckschlauch befestigt, der Steigrohr und Auslassventil verbindet. Der zweite Anschluss 40 besitzt ein federbelastetes Auslassventil 82, an dem ein Anschluss 84 für einen Schlauch eines zu reparierenden Reifens ausgebildet ist, die das Steigrohr halten.

Sämtliche Komponenten der Reifenabdichtvorrichtung sind bevorzugt aus Kunststoff gefertigt und beispielsweise spritzgegossen. Es ist zudem möglich, beispielsweise den Abdichtmittelbehälter in einem Zweikomponenten-Spritzgussverfahren herzustellen. Es ist zudem möglich, die Entnahmevorrichtung 14 und den Abdichtmittelbehälter dauerhaft zu verbinden, beispielsweise zu verschweißen. Eine weitere Möglichkeit ist, die Koppeleinheit 47 mit einem Dorn zu versehen, der in der Entnahmestellung in den Abdichtmittelbehälter eindringt und so eine Verdrehsicherung darstellt.

### Bezugszeichenliste

### (Teil der Beschreibung)

- 0: Reifenabdichtvorrichtung
- 12: Abdichtmittelbehälter
- 14: Entnahmevorrichtung
- 16: Abdichtmittel
- 18: Steigrohr
- 20: freies Ende
- 22: Innenwand
- 24: Ausnehmung
- 26: Einsatz
- 28: Behälterkörper
- 30: Einlass
- 32: Gewindestutzen
- 34: Siegel
- 36: Gehäuse
- 38: erster Anschluss
- 40: zweiter Anschluss
- 42: Innengewinde
- 44: Außengewinde
- 46: Schneidvorrichtung
- 47: Koppeleinheit
- 48: Koppelstutzen
- 50: spitzes Ende
- 52: O-Ring
- 54: Ringkanal
- 56: Gewinde
- 58: Adapter
- 60: Druckluft
- 62a,b: Ringdichtung
- 64: Zylindervolumen
- 66: Verbindungskanal
- 68: Verbindungsstutzen
- 70: Dichthülle
- 72: Steigrohrhalterung
- 74: Sicherungsstift
- 76: Trennbolzen
- 78a,b,c: O-Ring
- 80: federbelastetes Einlassventil
- 82: federbelastetes Auslassventil
- 84: Anschluss

- M: Mittelpunkt
- L: Längsachse
- S: Standfläche
- K: Kipppunkt

## Patentansprüche

1. Vorrichtung zum Abdichten aufblasbarer Gegenstände, insbesondere Reifenabdichtvorrichtung, mit
(a) einem Abdichtmittelbehälter (12), der
- ein Abdichtmittel (16) enthält und
- ein Steigrohr (18), das in den Abdichtmittelbehälter (12) ragt,
- ein Siegel (34), das in den Abdichtmittelbehälter (12) abdichtmitteldicht verschließt, und
- einen Einlass (30), der in den Abdichtmittelbehälter (12) mündet, umfasst,
(b) einer Entnahmevorrichtung (14) zum Entnehmen von Abdichtmittel (16) aus dem Abdichtmittelbehälter (12), die
- einen ersten Anschluss (38) zum Einleiten von Druckluft und
- einen zweiten Anschluss (40) zum Ableiten von Abdichtmittel (16) umfasst und
- ausgebildet ist, um mit dem Abdichtmittelbehälter (12) reversibel verbunden zu werden, sowie
- eine Trennvorrichtung (46) zum Durchbrechen des Siegels (34) besitzt,
wobei die Entnahmevorrichtung (14) auf den aufrecht stehend betriebenen Abdichtmittelbehälter (12) aufschraubbar ist und die Trennvorrichtung eine Schneidvorrichtung (46) ist, wobei der Abdichtmittelbehälter (12) eine Standfläche aufweist, mit der er auf einem Untergrund in Kontakt steht,
**dadurch gekennzeichnet, dass** die Trennvorrichtung (46) einen beweglich gelagerten Koppelstutzen (48) umfasst, der so ausgebildet ist, dass er sich nur dann, wenn die Entnahmevorrichtung (14) mit dem Abdichtmittelbehälter (12) verbunden ist und der erste Anschluss (38) mit Druckluft beaufschlagt wird, in Richtung auf den Abdichtmittelbehälter (12) zu bewegt, das Siegel (34) durchbricht und mit dem Steigrohr (18) abdichtmitteldicht koppelt.

2. Vorrichtung nach Anspruch 1, **dadurch gekennzeichnet, dass** der Koppelstutzen (48) an einer Koppeleinheit (47) ausgebildet ist, die zwischen einer Ruhestellung und einer Entnahmestellung beweglich in einem Gehäuse (36) der Entnahmevorrichtung (14) gelagert ist und einen Verbindungskanal (66) aufweist, wobei der Koppelstutzen (48) in der Entnahmestellung mit dem Steigrohr (18) abdichtmitteldicht gekoppelt ist und der Verbindungskanal (66) nur in der Entnahmestellung den Einlass (30) mit dem zweiten Anschluss (40) verbindet.

3. Vorrichtung nach einem der vorstehenden Ansprüche, **dadurch gekennzeichnet, dass** das Steigrohr (18) konzentrisch zu einem Gewinde (42) angeordnet ist, mittels dem die Entnahmevorrichtung (14) auf den Abdichtmittelbehälter (12) aufschraubbar ist.

4. Vorrichtung nach Anspruch 6, **dadurch gekennzeichnet, dass** das Steigrohr (18) ein freies Ende (20) besitzt und mit dem freien Ende (20) an einer Innenwand (22) des Abdichtmittelbehälters (12) anliegt.

5. Vorrichtung nach einem der vorstehenden Ansprüche, **dadurch gekennzeichnet, dass** der Abdichtmittelbehälter (12) eine der Entnahmevorrichtung (14) abgewandte Standfläche (S) aufweist, die so ausgebildet ist, dass der Abdichtmittelbehälter (12) im mit der Entnahmevorrichtung (14) verbundenen Zustand kippsicher stellbar ist.

6. Vorrichtung nach Anspruch 5, **dadurch gekennzeichnet, dass** die Standfläche (S) so ausgebildet ist, dass ein Kipppunkt (K) des Abdichtmittelbehälters(12) stets jenseits der senkrechten Projektion des Abdichtmittelbehälters (12) auf die Standfläche (S) liegt

## Claims

1. Device for sealing inflatable articles, in particular a tyre sealing device, having
(a) a sealant container (12) that
- contains a sealant (16) and
- a riser pipe (18), which projects into the sealant container (12),
- a seal (34), which closes the sealant container (12) in a sealant-tight manner, and
- comprises an inlet (30), which opens into the sealant container (12),
(b) a removal device (14) for removing sealant (16) from the sealant container (12), said removal device (14) comprising
- a first port (38) for introducing compressed air and
- a second port (40) for discharging sealant (16), and
- being configured to be connected reversibly to the sealant container (12), and
- having a separating device (46) for rupturing the seal (34),
wherein the removal device (14) is screwable onto the sealant container (12) that is operated in an upright position and the separating device is a cutting device (46), wherein the sealant container (12) has a standing surface by which it is in contact with an underlying surface,
**characterized in that** the separating device (46) comprises a movably mounted coupling connecting piece (48), which is configured such that it moves in the direction of the sealant container (12), ruptures the seal (34) and is coupled to the riser pipe (18) in a sealant-tight manner only when the removal device (14) is connected to the sealant container (12) and the first port (38) is supplied with compressed air.

2. Device according to Claim 1, **characterized in that** the coupling connecting piece (48) is formed on a coupling unit (47) that is mounted in a housing (36) of the removal device (14) so as to be movable between a rest position and a removal position and has a connecting duct (66), wherein the coupling connecting piece (48) is coupled to the riser pipe (18) in a sealant-tight manner in the removal position and the connecting duct (66) connects the inlet (30) to the second port (40) only in the removal position.

3. Device according to either of the preceding claims, **characterized in that** the riser pipe (18) is arranged concentrically with a thread (42) by means of which the removal device (14) is screwable onto the sealant container (12).

4. Device according to Claim 6, **characterized in that** the riser pipe (18) has a free end (20) and bears against an inner wall (22) of the sealant container (12) by way of the free end (20).

5. Device according to one of the preceding claims, **characterized in that** the sealant container (12) has a standing surface (S) remote from the removal device (14), said standing surface (S) being configured such that the sealant container (12) is positionable in a non-tiltable manner in the state connected to the removal device (14).

6. Device according to Claim 5, **characterized in that** the standing surface (S) is configured such that a tilting point (K) of the sealant container (12) is always located beyond the perpendicular projection of the sealant container (12) onto the standing surface (S).

## Revendications

1. Dispositif pour assurer l'étanchéité d'objets gonflables, en particulier dispositif pour assurer l'étanchéité de pneumatiques, avec
(a) un réservoir d'agent d'étanchéité (12), qui
- contient un agent d'étanchéité (16) et qui comprend
- un tube montant (18), qui pénètre dans le réservoir d'agent d'étanchéité (12),
- un joint d'étanchéité (34), qui ferme de façon étanche à l'agent d'étanchéité le réservoir d'agent d'étanchéité (12), et
- une entrée (30), qui débouche dans le réservoir d'agent d'étanchéité (12),
(b) un dispositif de prélèvement (14) pour prélever de l'agent d'étanchéité (16) hors du réservoir d'agent d'étanchéité (12), qui comprend
- un premier raccord (38) pour l'introduction d'air comprimé et
- un second raccord (40) pour l'évacuation d'agent d'étanchéité (16) et
- qui est conçu pour être assemblé de façon réversible au réservoir d'agent d'étanchéité (12), ainsi que
- un dispositif de séparation (46) pour percer le joint d'étanchéité (34).
dans lequel le dispositif de prélèvement (14) peut être vissé sur le réservoir d'agent d'étanchéité (12) placé en position dressée et le dispositif de séparation est un dispositif de coupe (46), dans lequel le réservoir d'agent d'étanchéité (12) présente une face d'appui, avec laquelle il est en contact avec un support,
**caractérisé en ce que** le dispositif de séparation (46) comprend un embout de couplage mobile (48), qui est réalisé de telle manière qu'il ne se déplace en direction du réservoir d'agent d'étanchéité (12), qu'il ne perce le joint d'étanchéité (34) et qu'il ne se couple au tube montant (18) de façon étanche à l'agent d'étanchéité que lorsque le dispositif de prélèvement (14) est assemblé au réservoir d'agent d'étanchéité (12) et que le premier raccord (38) est alimenté en air comprimé.

2. Dispositif selon la revendication 1, **caractérisé en ce que** l'embout de couplage (48) est formé sur une unité de couplage (47), qui est montée de façon mobile entre une position de repos et une position de prélèvement dans un boîtier (36) du dispositif de prélèvement (14) et présente un canal de liaison (66), dans lequel l'embout de couplage (48) dans la position de prélèvement est couplé au tube montant (18) de façon étanche à l'agent d'étanchéité et le canal de liaison (66) ne relie que dans la position de prélèvement l'entrée (30) au second raccord (40).

3. Dispositif selon l'une quelconque des revendications précédentes, **caractérisé en ce que** le tube montant (18) est disposé de façon concentrique à un filet (42), au moyen duquel le dispositif de prélèvement (14) peut être vissé sur le réservoir d'agent d'étanchéité (12) .

4. Dispositif selon la revendication 6, **caractérisé en ce que** le tube montant (18) présente une extrémité libre (20) et s'applique avec l'extrémité libre (20) sur une paroi intérieure (22) du réservoir d'agent d'étanchéité (12) .

5. Dispositif selon l'une quelconque des revendications précédentes, **caractérisé en ce que** le réservoir d'agent d'étanchéité (12) présente une face d'appui (S) située à l'opposé du dispositif de prélèvement (14), qui est réalisée de telle manière que le réservoir d'agent d'étanchéité (12) puisse être posé sans risque de basculement dans l'état assemblé au dispositif de prélèvement (14).

6. Dispositif selon la revendication 5, **caractérisé en ce que** la face d'appui (S) est réalisée de telle manière qu'un point de basculement (K) du réservoir d'agent d'étanchéité (12) se trouve toujours à côté de la projection verticale du réservoir d'agent d'étanchéité (12) sur la face d'appui (S).
